# EUROPEAN PATENT SPECIFICATION

(11) **EP 2 059 908 B1**
(45) Date of publication and mention of the grant of the patent: **12.11.2014**
(21) Application number: 06803142.6
(22) Date of filing: 08.09.2006
(51) Int. Cl.: G06T 15/00, G01S 19/37

(54) **PROCESSING OF SIGNALS FROM GLOBAL NAVIGATION SATELLITE SYSTEMS BY A GRAPHICS PROCESSOR**
VERARBEITUNG VON SIGNALEN AUS GLOBALEN NAVIGATIONSSATELLITENSYSTEMEN DURCH EINEN GRAFIKPROZESSOR
TRAITEMENT DES SIGNAUX DE SYSTÈMES SATELLITES DE NAVIGATION GLOBALE PAR UN PROCESSEUR GRAPHIQUE

(43) Date of publication of application: 20.05.2009
(73) Proprietor: Cambridge Silicon Radio Limited, Cambridge, Cambridgeshire CB4 OWZ (GB)
(72) Inventor: HAKANSON, Mats, Robin, S-57493 Vetlanda (SE); MITELMAN, Alexander, S-11339 Stockholm (SE); STAHLBERG, Christian, S-19267 Sollentuna (SE)
(74) Representative: Gillard, Matthew Paul
(86) International application number: PCT/US2006/034924
(87) International publication number: WO 2008/030241

(56) References cited:
- US-A1- 2003 154 025
- US-A1- 2004 125 103
- US-A1- 2005 062 762
- PER-LUDVIG NORMARK AND CHRISTIAN STÅHLBERG: "Hybrid GPS/Galileo Real Time Software Receiver", PROCEEDINGS OF THE 18TH INTERNATIONAL TECHNICAL MEETING OF THE SATELLITE DIVISION OF THE INSTITUTE OF NAVIGATION, [Online] 13 September 2005 (2005-09-13), pages 1906-1913, XP002659915, Retrieved from the Internet: URL:http://www.ion.org> [retrieved on 2011-09-20]
- METELITSA, BORIS: "Comparing Software Development Approaches for General Purpose GPU Computing", 21ST ANNUALCOMPUTER SCIENCE CONFERENCE, [Online] 16 April 2005 (2005-04-16), pages SA3-T2-1-SA3-T2-7, XP002659913, Retrieved from the Internet: URL:http://www.ewp.rpi.edu/hartford/~rhb/c s_seminar_2005/SessionA3/metelitsa.pdf> [retrieved on 2011-09-20]
- SUD AVNEESH, GOVINDARAJU NAGA, GAYLE RUSSELL, MANOCHA DINESH: "Interactive 3D distance field computation using linear factorization", PROCEEDINGS OF THE 2006 SYMPOSIUM ON INTERACTIVE 3D GRAPHICS AND GAMES , SI3D '06, [Online] 14 March 2006 (2006-03-14), pages 117-229, XP002659918, Retrieved from the Internet: URL:http://dl.acm.org/citation.cfm?id=1111 432> [retrieved on 2011-09-23]
- J.D. OWENS ET AL.: "A Survey of General-Purpose Computation on Graphics Hardware", EUROGRAPHICS 2005, STATE OF THE ART REPORTS, [Online] August 2005 (2005-08), pages 21-51, XP002659914, Retrieved from the Internet: URL:http://www.idav.ucdavis.edu/publicatio ns/print_pub?pub_id=844> [retrieved on 2011-09-05]
- FRANCIS KELLY AND ANIL KOKARAM: "Fast Image Interpolation for Motion Estimation using Graphics Hardware", REAL TIME IMAGING VIII, SPIE, 2004, pages 184-194, XP002659912,
- SHARIN CHARKHANDEH ET AL.: "Implementation and Testing of a Real-Time Software-Based GPS Receiver for x86 Processors", PROCEEDINGS OF THE 2006 NATIONAL TECHNICAL MEETING OF THE INSTITUTE OF NAVIGATION, [Online] 18 January 2006 (2006-01-18), pages 1/8-8/8, XP002659916, CA, USA Retrieved from the Internet: URL:http://www.ion.org> [retrieved on 2011-09-21]
- GREGORY W. HECKLER AND JAMES L. GARRISON: "Architecture of a Reconfigurable Software Receiver", PROCEEDINGS OF THE 17TH INTERNATIONAL TECHNICAL MEETING OF THE SATELLITE DIVISION OF THE INSTITUTE OF NAVIGATION (ION GNSS 2004), [Online] 21 September 2004 (2004-09-21), pages 947-955, XP002659917, USA Retrieved from the Internet: URL:http://www.ion.org> [retrieved on 2011-09-22]

## Description

### TECHNICAL FIELD

The present invention relates to a method for processing signals from a global navigation satellite system ("GNSS"), such as the Global Positioning System (GPS), the Galileo System, or the GLONASS system, and more particularly to a method for processing such signals by the use of a conventional graphics processor. The present invention also relates to an article of manufacture comprising computer readable program code configured to process the signals from such a satellite navigation system.

### BACKGROUND OF THE INVENTION

GNSS is well known in the art. Presently, GPS is fully operational and GLONASS is functional but in some disarray; the Galileo System is beginning to be deployed. The present invention can be used with all types of GNSS, although for the purpose of explanation of the present invention, reference will be made to GPS.

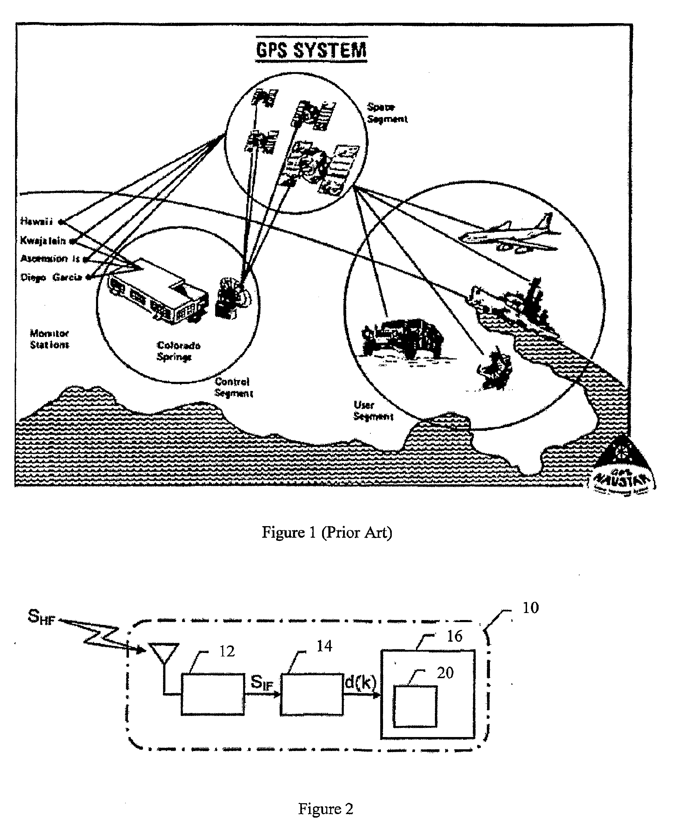

Figure 1 shows a schematic diagram of GPS to which the method of the present invention can be applied. The space segment of GPS consists of a plurality of satellites (24), with another set of operational spare satellites (such as 6), for a total of thirty (30) satellites in orbit. Each satellite orbits the earth at an approximate altitude of 20,160 km and repeats its ground track over any particular point on earth approximately twice per sidereal day (23 hours, 56 minutes, 4 seconds). The satellites are arranged in 6 orbital planes inclined at approximately 55 degrees with respect to the equator and are evenly spaced around the equator.

For GPS applications, at any location on earth, the signals from four (4) different satellites can uniquely determine the position/time at the received location. The system is designed so that all satellites nominally transmit at the same time and on the same carrier frequency (1575.42 MHz). Multiple access, which is the ability to receive an individual satellite's signal in the presence of other signals on the same frequency, is accomplished by means of a unique repeating modulation, or "spreading code," assigned to each satellite. This modulation enables the receiver to selectively decode the navigation data from a particular satellite, and serves as a unique identifier. Because each satellite is orbiting the earth and is moving relative to the receiver's location, the signal received from that satellite at that location and time will have a specific Doppler shift frequency with respect to the nominal carrier frequency. From the knowledge of the Doppler shift and the timing of the modulation code repetitions, or "code phase," for each received satellite signal, the position/time at the particular location on earth can be determined using the principle of triangulation.

The mathematics of processing the signal(s) from the GNSS satellites is well known in the art. In general, the signal from each satellite must first be acquired, and once acquired, it must be tracked. For acquisition, the frequency spectrum is searched over many Doppler values, which are applied to locally stored replicas of the expected satellite signal. Thus, for example, a number of replicas are generated with frequency shifts of up to +/- 5 KHz from the expected frequency for each satellite. Each replica is characterized by its associated frequency shift. A frequency domain correlation operation is then performed between the received signal and an array of replica signals having the various Doppler shifted values. From this frequency domain correlation operation, a maximal value is determined and compared against a threshold. The location of a unique maximum that exceeds the threshold identifies both the Doppler frequency and the timing of the code modulation for a particular satellite signal. From this calculation, the information relative to Doppler shift and time delay is used to track the satellite so identified. Typically, this is used to adjust the tracking loops in the receiver, e.g. a phase lock loop and a delay lock loop. While in principle this calculation appears to be simple, the actual implementation is quite computationally intensive. Considerations for a practical GPS receiver must include not only cost, but also rapidity of the calculation, and in most cases power (usually battery) consumption, since these receivers are often intended to be used in portable devices.

One prior art processor is called a programmable graphics processor, such as those available from Nvidia Corporation of Santa Clara, California. A programmable graphics processor, as will be discussed in greater detail hereinafter, is characterized by a rasterizer unit, a texture unit, a pixel shader unit, and a frame buffer unit. The texture unit and the frame buffer unit are simply memory locations where data are stored. The rasterizer unit receives data indicating values of endpoints of an array in the texture unit and performs an interpolation between the endpoint values, and sends the result to the pixel shader unit. The pixel shader unit operates on the data read from the texture unit and stores the result in the frame buffer unit for ultimate display on a display unit such as an LCD display. The pixel shader unit is the programmable portion of the programmable graphics processor.

It is one aim of the present invention to provide a method of rapidly processing signals from a GNSS using the elements of a graphics processor.

### SUMMARY OF THE INVENTION

In the present invention, a method of processing a signal from a navigation satellite first receives the signal from the navigation satellite and forms a received signal. The received signal is converted into a digitized form signal. The digitized form signal is transformed by a programmable graphics processor having a rasterizer unit, a pixel shader unit and a memory unit. A first array of a first corresponding data of the digitized form signal are stored in the memory unit. The first addresses and values of endpoints of the first array of the first corresponding data of the digitized form signal are supplied to the rasterizer unit. The rasterizer unit generates a plurality of interpolated values between values of endpoints of the first array. The plurality of interpolated values and values of endpoints for the first array correspond to addresses in the memory unit for the first array of first corresponding data of the digitized form signal. The pixel shader unit operates on the first array of first corresponding data of the digitized signal from the memory unit, based upon the plurality of interpolated values and values of the endpoints for the first array supplied from the rasterizer unit to form a resulting array of corresponding data. The resulting array is stored in the memory unit, at the first addresses.

### BRIEF DESCRIPTION OF THE DRAWING

Figure 1 is a schematic diagram of GPS.
Figure 2 is a schematic block diagram of an apparatus suitable for carrying out the method of the present invention, and for executing the computer readable program code of the present invention.
Figure 3 is a detailed block level diagram of a portion of a programmable graphics processor for carrying out the method of the present invention.
Figure 4 is a chart showing the determination of the particular Doppler value and time shift used to acquire and track a GNSS satellite.

### DETAILED DESCRIPTION OF THE INVENTION

Figure 2 shows a block level schematic diagram of an apparatus 10 suitable for carrying out the method of the present invention. The apparatus 10 is a receiver for receiving signals generated from one or more GNSS satellites. As previously discussed, for the purpose of explanation of the present invention, the discussion set forth herein is focused on GPS, although the present invention may be used in the processing of a signal from any GNSS satellite.

The apparatus 10 comprises an antenna for receiving a signal from a GPS satellite. The signal, Shf, (Signal High Frequency) is received by the apparatus 10 and is processed through a conventional analog processing circuit 12, which includes circuits such as a low noise amplifier (LNA) and a frequency down converter circuit, to generate an analog processed signal, Sif (Signal Intermediate Frequency). The signal Sif is supplied to a second processing circuit 14 which may include further down conversion of the frequency Sif, and is then digitized to form a digitized form signal d(k) of the received signal Shf. Finally, the digitized form signal d(k) is supplied to a digital processing circuit 16, which may include one or more digital processors, such as DSP, microprocessor, state machine, and/or hardwired logic circuits. In the context of the present invention, the digital processing circuit 16 also includes a programmable graphics processor 20. Since all of the GNSS satellites operate at the same frequency, the apparatus 10 receives signals from all of the satellites (that are in view of the GPS receiver apparatus 10, or are received by the apparatus 10) and processes them in parallel.

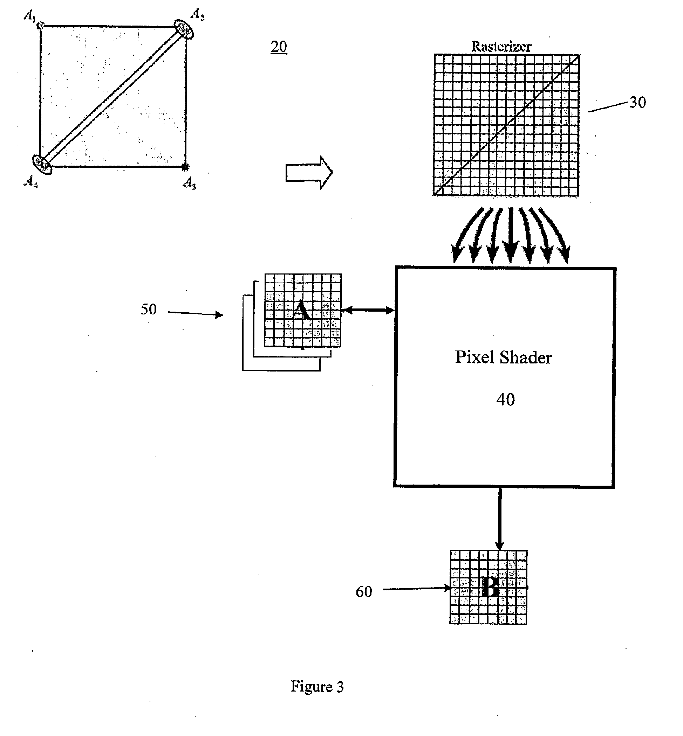

Figure 3 shows a block level diagram of a programmable graphics processor 20 useful for carrying out the method of the present invention. The programmable graphics processor 20 is a conventional well known programmable graphics processor, such as that from Nvidia Corporation of Santa Clara, California. The programmable graphics processor 20 typically in the prior art has been used to take data and render the data for display on a display device, such as an LCD display, or to perform other image processing tasks for later display, such as medical diagnostic imaging. Thus, although they are processors, in the sense that they are capable of performing logic comparison of data, and manipulation thereof, programmable graphics processors of this type have typically been used for the special purpose of creating realistic displays on a display device.

The programmable graphics processor 20 shown in Figure 3 is useful for carrying out the method of the present invention, and comprises a rasterizer unit 30, a pixel shader unit 40, one or more texture units 50, and a frame buffer unit 60. The texture units 50 and the frame buffer unit 60 are logically separate memory units, but physically they may comprise a single memory unit. In the prior art, the rasterizer unit 30 when supplied with values at endpoints of an array can perform an interpolation of the values in between the values of the endpoints of the array. Further, in the prior art, the pixel shader unit 40 is the programmable portion of the programmable graphics processor 20. The pixel shader unit 40 can read data from the texture units 50 and output the resultant data into the frame buffer unit 60. From the frame -buffer unit 60, the data is typically displayed on a display device (not shown).

In the method of the present invention, the programmable graphics processor 20 receives values of endpoints of an array. Thus, as shown in Figure 3, the values of the endpoint of an array received by the processor 20 may have the values (A1, A2, A3 and A4). Each value A1, A2, A3 or A4 may contain a set of values. Associated with each value which are the endpoints of the array are addresses. Thus, although not shown in Figure 3, an address of (x1, y1) would be associated with the value A1, an, address of (x2, y2) would be associate with the value A2, an address of (x3, y3) would be associate with the value A3, and an address of (x4, y4) would be associate with the value A4.

The rasterizer unit 30 receives the inputted information (x1, y1), A1; (x2, y2), A2; (x3, y3), A3; and (x4, y4), A4, and operates on them by performing an interpolation of all the values between all of the endpoints A1, A2, A3 and A4. In essence, the rasterizer unit 30 performs an interpolation of all the values in the array bounded by the endpoint values of A1, A2, A3 and A4. The endpoint values A1, A2, A3, and A4, along with the interpolated values therebetween, are passed to the pixel shader unit 40. The pixel shader unit 40 reads the array of data from the texture memory unit 50 at the addresses defined by A1, A2, A3, A4 and all the values interpolated therebetween. An array of data is previously stored in the texture memory unit 50 at the location of A1, A2, A3 and A4.

The pixel shader unit 40 operates on the array of data from the texture memory unit 50 at the address location of A1, A2, A3 and A4, and then stores the result in the frame buffer memory unit 60 at the address location defined by (x1, y1); (x2, y2); (x3, y3); and (x4, y4).

In a preferred embodiment, because the programmable graphics processor 20 is particularly adapted to process data in the form of a triangle, the array of data whose endpoint values are defined by A1, A2, A3 and A4, are the endpoints of two triangles adjacent to one another.

One of the processes that the programmable graphics processor 20 can perform is a Fast Fourier Transform (FFT) or an inverse FFT of an array. An FFT operation or an inverse FFT operation is one of the operations commonly used in the processing of a signal from a GNSS satellite to determine the position/time of a location by a receiver. Thus, for example, in an FFT operation, the untransformed array of data is stored in the texture memory unit 50 at the address locations defined by the values of endpoints A1, A2, A3, A4, and the values therebetween interpolated by the rasterizer unit 30. The pixel shader unit 40 operates on the array of data read from the texture memory unit 50 to form an FFT transform thereof and store the results at the addresses (x1, y1); (x2, y2); (x3, y3); and (x4, y4) in the frame buffer memory unit 60. Typically, in an FFT (or inverse FFT) operation, as is well known in the art, many process steps are required. Thus, after the results are stored in the frame buffer memory unit 60, the results are then copied to the texture memory unit 50 at the address location defined by the endpoint values of the array A1, A2, A3, and A4. The programmable graphics processor 20 is then re-initiated. This iterative process continues until the FFT (or inverse FFT) operation is completed. The programming of the pixel shader unit 40 to perform the FFT operation (or an inverse FFT operation) is well known to those in the art.

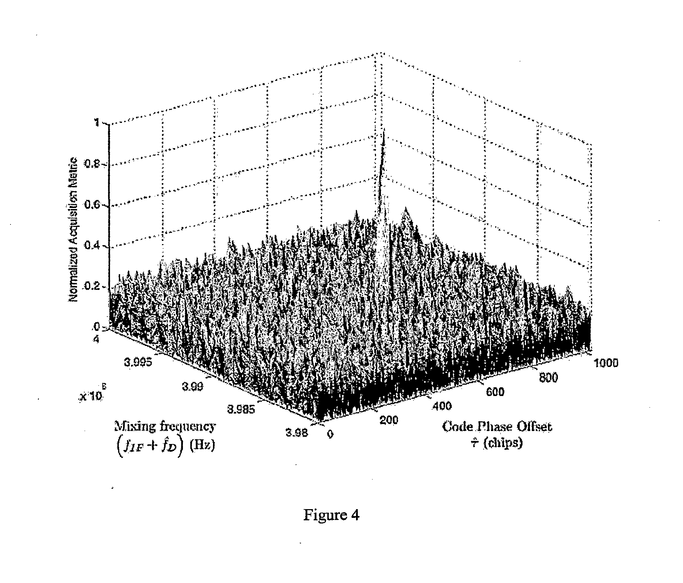

Another process that the programmable graphics processor 20 can perform is a frequency domain correlation operation between two arrays of data: one array is the array of data received from the GNSS satellites, while another array of data is one of the local replicas having Doppler shifted values. The operation of frequency domain correlation operation between two arrays of data by the programmable graphics processor 20 includes forming an FFT (or an inverse FFT) operation on an array of data. The two arrays of data, (defined by the values of the endpoints A1, A2, A3, and A4, and by the endpoints B1, B2, B3, and B4) are stored in the texture memory unit 50 at locations defined by the values of endpoints A1, A2, A3, A4, and the values therebetween interpolated by the rasterizer unit 30, and by the values of endpoints B1, B2, B3, B4, and the values therebetween interpolated by the rasterizer unit 30. The two arrays of data are read from the texture memory unit 50 by the pixel shader unit 40, and operated thereon to form a frequency domain correlation thereof. The result is a single array, a collection of which comprises a three-dimensional figure, such as that depicted in Figure 4. This result is stored in the frame buffer memory 60. Again, similar to the discussion heretofore, with regard to the FFT (or inverse FFT) operation, a frequency domain correlation operation may require a multi-step process. Thus, after the results are stored in the frame buffer memory 60, they are copied back into the texture memory unit 50, and the programmable graphics processor 20 is re-initiated. The process is iteratively performed until the frequency domain correlation operation is completed.

The frequency domain correlation operation operates between a signal received from one or more GNSS satellites and a locally generated replica signal of a particular satellite. If there is a correlation between the two arrays as a result of the frequency domain correlation operation, then there is a maximal value as shown in Figure 4. In the graph shown in Figure 4, one of the axes is the Doppler shift value and the other is a time phase shift value. If a maximal value is found, then the Doppler shift and the time shift corresponding to the maximal value are then used to lock onto that satellite. Thus, for example, the Doppler value and the time shift value may be used by a phase or delay lock loop to lock onto the satellite, as is well known to those skilled in the art.

Once the signal from a satellite is acquired, the satellite must be tracked as it traverses its orbit. One method to track a satellite is to generate time shifted correlator samples, one on either side of the time shift value of the code phase estimate used for tracking the satellite, and typically equally spaced from the code phase estimate. The time shifted correlator samples are then compared to one another and the time shift value is adjusted based upon the comparing step, such that the time shifted correlator samples remain equal to one another.

The use of a programmable graphics processor 20 to perform operations such as FFT transforms or inverse transforms on a single array of data or a frequency domain correlation on two arrays of data is advantageous because such programmable processors 20 are adapted to perform calculations in parallel, rapidly, thereby saving time. In addition, many GPS receivers 10 are part of an apparatus containing processors that perform other functions, such as cellular phone, PDA, digital camera, etc. This apparatus may have a programmable graphics processor 20 that is otherwise idling while the GPS receiver 10 is performing the functions of acquiring and tracking signals from various GPS satellites. Thus, the present invention more efficiently utilizes all of the resources of a portable electronic device in acquiring and tracking a GPS signal.

## Claims

1. A method of processing a signal from a navigation satellite comprising:
receiving a signal from said navigation satellite to form a received signal;
conversing said received signal into a digitized form signal;
transforming said digitized form signal by a programmable graphics processor having a rasterizer unit, a pixel shader unit and a memory unit, wherein a first array of a first data of said digitized form signal are stored in said memory unit, and wherein said transforming step further comprises:
supplying first addresses and values of endpoints of said first array of said first data of said digitized form signal to said rasterizer unit, said endpoints corresponding to the endpoints of a triangle;
generating a plurality of interpolated values between values of endpoints of said first array, by said rasterizer unit;
operating on said first array of first data of said digitized signal from the memory unit by said pixel shader unit based upon said plurality of interpolated values and values of said endpoints for said first array supplied from said rasterizer unit to form a resulting array of data; and
storing said resulting array in said memory unit, at said first addresses.

2. The method of claim 1 wherein a second array of a second data of said digitized form signal are stored in said memory unit, and wherein said transforming step further comprising:
supplying second addresses and values of endpoints of said second array of said second data of said digitized form signal to said rasterizer unit;
generating a plurality of interpolated values between values of endpoints of said second array, by said rasterizer unit, wherein said plurality of interpolated values and values of endpoints for said second array corresponds to addresses in said memory unit for said second array of second data of said digitized form signal;
operating on said first array and second array of first and second data of said digitized signal from the memory unit by said pixel shader unit based upon said plurality of interpolated values and values of said endpoints for said first and second array supplied from said rasterizer unit to form a resulting array of data; and
storing said resulting array in said memory unit, at said second addresses.

3. The method of claim 2 wherein said second addresses are the same as the first addresses.

4. The method of claim 3 wherein said first data of said digitized form signal corresponds to said received signal and has a characteristic Doppler shift with respect to a nominal frequency.

5. The method of claim 4 wherein said second data of said digitized form signal is a pre-computed replica signal of said digitized form signal.

6. The method of claim 5 wherein said processing is performed for a plurality of navigation satellites to receive a plurality of signals from said plurality of satellites, determining the position/time related data based upon said plurality of signals received.

7. The method of claim 6 wherein said pre-computed replica signal has a characteristic Doppler frequency, and a plurality of samples.

8. The method of claim 7 wherein said method acquires a plurality of signals from a plurality of navigation satellites and
wherein said second array of second data for said digitized form signal comprises a plurality of frequency shifted signals, each frequency shifted signal shifted in frequency by a characteristic Doppler value.

9. The method of acquiring a plurality of signals from a plurality of navigation satellite of claim 8 wherein said method comprises:
performing a frequency domain correlation operation between said first array of digitized form signals and said second array of digitized form signals to form an array of correlation functions.

10. The method of acquiring a plurality of signals from a plurality of navigation satellite of claim 9, further comprising:
determining a maximal value, if one exists, for each received signal.

11. The method of acquiring a plurality of signals from a plurality of navigation satellites of claim 10 wherein in the event a maximal value is determined, the associated characteristic Doppler shift and associated code phase value of the frequency shifted signal of the first array corresponding to the maximal value in the array of correlation functions is used to lock onto the received signal.

12. The method of claim 10 wherein said processing a signal from a navigation satellite comprises a method of tracking each of said plurality of satellites.

13. The method of claim 11 wherein said method of tracking further comprising:
generating a plurality of time shifted correlator samples, time shifted on either side of said code phase value, associated with said maximal value, at said frequency shift associated with said maximal value;
comparing said plurality of time shifted correlator samples;
adjusting said time shift based on said comparing step.

14. An article of manufacture for processing a signal from a navigation satellite, wherein the signal is received and is converted into a digitized form signal, and is further transformed by a programmable graphics processor having a rasterizer unit, a pixel shader unit and a memory unit, wherein a first array of a first data of said digitized form signal are stored in said memory unit, wherein said article of manufacturing comprising:
computer usable medium having computer readable program code embedded therein, wherein said computer usable medium further comprises:
computer readable program code configured to cause the programmable graphics processor to received first addresses and values of endpoints of the first array of first data of said digitized form signal to said rasterizer unit, said endpoints corresponding to the endpoints of a triangle;
computer readable program code configured to cause the programmable graphics processor to generate a plurality of interpolated values between values of said endpoints of said first array by said rasterizer unit;
computer readable program code configured to cause the programmable graphics processor to operate on said first array of first data of said digitized form signal from the memory unit by said pixel shader unit based upon said plurality of interpolated values and values of said endpoints for said first array supplied from said rasterizer unit, to form a resulting array of data; and
computer readable program code configured to cause the programmable graphics processor to store the resulting array in said memory unit at said first addresses.

15. The article of manufacture of claim 14 wherein a second array of a second data of said digitized form signal are stored in said memory unit, and wherein said computer usable medium further comprises:
computer readable program code configured to cause the programmable graphics processor to received second addresses and values of endpoints of the second array of second data of said digitized form signal to said rasterizer unit;
computer readable program code configured to cause the programmable graphics processor to generate a plurality of interpolated values between values of said endpoints of said second array by said rasterizer unit, wherein said plurality of interpolated values and values of said endpoints for said second array corresponds to addresses in said memory unit for said second array of second data of said digitized form signal;
computer readable program code configured to cause the programmable graphics processor to operate on said second array of first data of said digitized form signal from the memory unit by said pixel shader unit based upon said plurality of interpolated values and values of said endpoints for said second array supplied from said rasterizer unit, to form a resulting array of data;
computer readable program code configured to cause the programmable graphics processor to store the resulting array in said memory unit at said second addresses;
wherein said first data of said digitized form signal corresponds to said received signal and has a characteristic Doppler shift with respect to a nominal frequency;
wherein said second data of said digitized form signal is a pre-computed replica signal of said digitized form signal, having a characteristic Doppler frequency and a plurality of samples; and
wherein said processing is performed for a plurality of navigation satellites to receive a plurality of signals from said plurality of navigation satellites to determine the position/time relates data based upon the plurality of signals received.

16. The article of manufacture of claim 14 and including computer readable program code configured to carry out the method of any of claims 2 to 13.

## Patentansprüche

1. Verfahren zum Verarbeiten eines Signals von einem Navigationssatelliten, das aufweist:
Empfangen eines Signals von dem Navigationssatelliten, um ein empfangenes Signal auszubilden;
Umwandeln des empfangenen Signals in ein digitales Signal;
Transformieren des digitalen Signals mittels eines programmierbaren Grafikprozessors, der eine Rastereinheit, eine Pixelschattierungseinheit und eine Speichereinheit aufweist, wobei ein erstes Array von ersten Daten des digitalen Signals in der Speichereinheit gespeichert werden und wobei der Transformationsschritt außerdem aufweist:
Zuführen von ersten Adressen und Werten von Endpunkten des ersten Arrays der ersten Daten des digitalen Signals zu der Rastereinheit, wobei die Endpunkte mit den Endpunkten eines Dreiecks korrespondieren;
Erzeugen von mehreren interpolierten Werten zwischen Werten von Endpunkten des ersten Arrays mittels der Rastereinheit;
Bearbeiten des ersten Arrays von ersten Daten des digitalen Signals von der Speichereinheit mittels der Pixelschattierungseinheit auf der Grundlage der interpolierten Werte und der Werte der Endpunkte für das erste Array, die von der Rastereinheit geliefert werden, um ein resultierendes Array von Daten auszubilden; und
Speichern des resultierenden Arrays in der Speichereinheit an den ersten Adressen.

2. Verfahren nach Anspruch 1, wobei ein zweites Array von zweiten Daten des digitalen Signals in der Speichereinheit gespeichert wird und wobei der Transformationsschritt außerdem aufweist:
Zuführen von zweiten Adressen und Werten von Endpunkten des zweiten Arrays der zweiten Daten des digitalen Signals zu der Rastereinheit;
Erzeugen von mehreren interpolierten Werten zwischen Werten von Endpunkten des zweiten Arrays mittels der Rastereinheit, wobei die interpolierten Werte und die Werte von Endpunkten des zweiten Arrays mit Adressen in der Speichereinheit für das zweite Array von zweiten Daten des digitalen Signals korrespondieren;
Bearbeiten des ersten Arrays von ersten Daten und des zweiten Arrays von zweiten Daten des digitalen Signals von der Speichereinheit mittels der Pixelschattierungseinheit auf der Grundlage der interpolierten Werte und der Werte der Endpunkte für das erste und das zweite Array, die von der Rastereinheit zugeführt werden, um ein resultierendes Array von Daten auszubilden; und
Speichern des resultierenden Arrays in der Speichereinheit an den zweiten Adressen.

3. Verfahren nach Anspruch 2, wobei die zweiten Adressen dieselben wie die ersten Adressen sind.

4. Verfahren nach Anspruch 3, wobei die ersten Daten des digitalen Signals mit dem empfangenen Signal korrespondieren und eine charakteristische Dopplerverschiebung in Bezug auf eine Nennfrequenz aufweisen.

5. Verfahren nach Anspruch 4, wobei die zweiten Daten des digitalen Signals ein im Voraus berechnetes nachgebildetes Signal des digitalen Signals sind.

6. Verfahren nach Anspruch 5, wobei die Verarbeitung für mehrere Navigationssatelliten durchgeführt wird, um mehrere Signale von den Satelliten zu empfangen, um die Position/Zeit betreffende Daten auf der Grundlage der empfangenen Signale zu bestimmen.

7. Verfahren nach Anspruch 6, wobei das im Voraus berechnete nachgebildete Signal eine charakteristische Dopplerfrequenz und mehrere Samples aufweist.

8. Verfahren nach Anspruch 7, wobei das Verfahren mehrere Signale von mehreren Navigationssatelliten erlangt, und
wobei das zweite Array von zweiten Daten für das digitale Signal mehrere frequenzverschobene Signale aufweist, wobei jedes frequenzverschobene Signal um einen charakteristischen Dopplerwert frequenzverschoben ist.

9. Verfahren zum Erlangen von mehreren Signalen von mehreren Navigationssatelliten nach Anspruch 8, wobei das Verfahren aufweist:
Durchführen einer Korrelation im Frequenzbereich zwischen dem ersten Array von digitalen Signalen und dem zweiten Array von digitalen Signalen, um ein Array von Korrelationsfunktionen auszubilden.

10. Verfahren zum Erlangen von mehreren Signalen von mehreren Navigationssatelliten nach Anspruch 9, das außerdem aufweist:
Bestimmen eines Maximalwertes, wenn einer vorhanden ist, für jedes empfangene Signal.

11. Verfahren zum Erlangen von mehreren Signalen von mehreren Navigationssatelliten nach Anspruch 10, wobei in dem Fall, in dem ein Maximalwert bestimmt wird, die zugeordnete charakteristische Dopplerverschiebung und der zugeordnete Codephasenwert des frequenzverschobenen Signals des ersten Arrays, die mit dem Maximalwert in dem Array von Korrelationsfunktionen korrespondieren, verwendet wird, um sich auf das empfangene Signal zu fixieren.

12. Verfahren nach Anspruch 10, wobei das Verarbeiten eines Signals von einem Navigationssatelliten ein Verfahren zum Verfolgen jedes der Satelliten aufweist.

13. Verfahren nach Anspruch 11, wobei das Verfahren zum Verfolgen außerdem aufweist:
Erzeugen von mehreren zeitverschobenen Korrelatorsamples, die auf jeder Seite des Codephasenwertes zeitverschoben sind, der dem Maximalwert zugeordnet ist, bei der Frequenzverschiebung, die dem Maximalwert zugeordnet ist;
Vergleichen der zeitverschobenen Korrelatorsamples;
Einstellen der Zeitverschiebung auf der Grundlage des Vergleichsschrittes.

14. Herstellungsprodukt zum Verarbeiten eines Signals von einem Navigationssatelliten, wobei das Signal empfangen und in ein digitales Signal umgewandelt wird und außerdem von einem programmierbaren Grafikprozessor, der eine Rastereinheit, eine Pixelschattierungseinheit und eine Speichereinheit aufweist, transformiert wird, wobei ein erstes Array von ersten Daten des digitalen Signals in der Speichereinheit gespeichert wird, wobei das Herstellungsprodukt aufweist:
ein computernutzbares Medium, das einen eingebetteten computerlesbaren Programmcode aufweist, wobei das computernutzbare Medium außerdem aufweist:
einen computerlesbaren Programmcode, der ausgelegt ist, zu bewirken, dass der programmierbare Grafikprozessor erste Adressen und Werte von Endpunkten des ersten Arrays von ersten Daten des digitalen Signals an die Rastereinheit empfängt, wobei die Endpunkte mit den Endpunkten eines Dreiecks korrespondieren;
einen computerlesbaren Programmcode, der ausgelegt ist, zu bewirken, dass der programmierbare Grafikprozessor mehrere interpolierte Werte zwischen Werten der Endpunkte des ersten Arrays mittels der Rastereinheit erzeugt;
einen computerlesbaren Programmcode, der ausgelegt ist, zu bewirken, dass der programmierbare Grafikprozessor das erste Array von ersten Daten des digitalen Signals von der Speichereinheit mittels der Pixelschattierungseinheit auf der Grundlage der interpolierten Werte und der Werte der Endpunkte für das erste Array, die von der Rastereinheit zugeführt werden, bearbeitet, um eine resultierendes Array von Daten auszubilden; und
einen computerlesbaren Programmcode, der ausgelegt ist, zu bewirken, dass der programmierbare Grafikprozessor das resultierende Array in der Speichereinheit an den ersten Adressen speichert.

15. Herstellungsprodukt nach Anspruch 14, wobei ein zweites Array von zweiten Daten des digitalen Signals in der Speichereinheit gespeichert wird und wobei das computernutzbare Medium außerdem aufweist:
einen computerlesbaren Programmcode, der ausgelegt ist, zu bewirken, dass der programmierbare Grafikprozessor zweite Adressen und Werte von Endpunkten des zweiten Arrays von zweiten Daten des digitalen Signals an die Rastereinheit empfängt;
einen computerlesbaren Programmcode, der ausgelegt ist, zu bewirken, dass der programmierbare Grafikprozessor mehrere interpolierte Werte zwischen Werten der Endpunkte des zweiten Arrays mittels der Rastereinheit erzeugt, wobei die interpolierten Werte und die Werte der Endpunkte für das zweite Array mit Adressen in der Speichereinheit für das zweite Array von zweiten Daten des digitalen Signals korrespondieren;
einen computerlesbaren Programmcode, der ausgelegt ist, zu bewirken, dass der programmierbare Grafikprozessor das zweite Array von ersten Daten des digitalen Signals von der Speichereinheit mittels der Pixelschattierungseinheit auf der Grundlage der interpolierten Werte und der Werte der Endpunkte für das zweite Array, die von der Rastereinheit zugeführt werden, zu verarbeiten, und ein resultierendes Array von Daten auszubilden;
einen computerlesbaren Programmcode, der ausgelegt ist, zu bewirken, dass der programmierbare Grafikprozessor das resultierende Array in der Speichereinheit an den zweiten Adressen speichert;
wobei die ersten Daten des digitalen Signals mit dem empfangenen Signal korrespondieren und eine charakteristische Dopplerverschiebung in Bezug auf eine Nennfrequenz aufweisen;
wobei die zweiten Daten des digitalen Signals ein im Voraus berechnetes nachgebildetes Signal des digitalen Signals sind, das eine charakteristische Dopplerfrequenz und mehrere Samples aufweist; und
wobei das Verarbeiten für mehrere Navigationssatelliten durchgeführt wird, um mehrere Signale von den Navigationssatelliten zu empfangen, um die Position/Zeit betreffende Daten auf der Grundlage der empfangenen Signale zu bestimmen.

16. Herstellungsprodukt nach Anspruch 14, das einen computerlesbaren Programmcode enthält, der ausgelegt ist, das Verfahren nach einem der Ansprüche 2 bis 13 durchzuführen.

## Revendications

1. Procédé de traitement d'un signal provenant d'un satellite de navigation comprenant :
la réception d'un signal provenant dudit satellite de navigation pour constituer un signal reçu ;
la conversion dudit signal reçu en un signal sous forme numérisée ;
la transformation dudit signal sous forme numérisée par un processeur graphique programmable comportant une unité de tramage, une unité d'ombrage de pixels et
une unité de mémoire, dans lequel une première matrice de premières données dudit signal sous forme numérisée est mémorisée dans ladite unité de mémoire, et dans lequel ladite étape de transformation comprend en outre :
la fourniture de premières adresses et de valeurs de points d'extrémité de ladite première matrice desdites premières données dudit signal sous forme numérisée à ladite unité de tramage, lesdits points d'extrémité correspondant aux points d'extrémité d'un triangle ;
la génération d'une pluralité de valeurs interpolées entre des valeurs de points d'extrémité de ladite première matrice par ladite unité de tramage ;
le fonctionnement sur ladite première matrice de premières données dudit signal sous forme numérisée provenant de ladite unité de mémoire par ladite unité d'ombrage de pixels en fonction de ladite pluralité de valeurs interpolées et de valeurs desdits points d'extrémité pour ladite première matrice fournies par ladite unité de tramage afin de constituer une matrice résultante de données ; et
la mémorisation de ladite matrice résultante dans ladite unité de mémoire aux dites premières adresses.

2. Procédé selon la revendication 1, dans lequel une deuxième matrice de deuxièmes données dudit signal sous forme numérisée est mémorisée dans ladite unité de mémoire, et dans lequel ladite étape de transformation comprend en outre :
la fourniture de deuxièmes adresses et de valeurs de points d'extrémité de ladite deuxième matrice desdites deuxièmes données dudit signal sous forme numérisée à ladite unité de tramage ;
la génération d'une pluralité de valeurs interpolées entre des valeurs de points d'extrémité de ladite deuxième matrice, par ladite unité de tramage, dans lequel ladite pluralité de valeurs interpolées et de valeurs de points d'extrémité pour ladite deuxième matrice correspond à des adresses dans ladite unité de mémoire pour ladite deuxième matrice de deuxièmes données dudit signal sous forme numérisée ;
le fonctionnement sur ladite première matrice de premières données dudit signal sous forme numérisée et ladite deuxième matrice de deuxièmes données dudit signal sous forme numérisée provenant de l'unité de mémoire par ladite unité d'ombrage de pixels en fonction de ladite pluralité de valeurs interpolées et de valeurs desdits points d'extrémité pour ladite première matrice et ladite deuxième matrice fournies depuis ladite unité de tramage afin de constituer une matrice résultante de données ; et
la mémorisation de ladite matrice résultante dans ladite unité de mémoire aux dites deuxièmes adresses.

3. Procédé selon la revendication 2, dans lequel lesdites deuxièmes adresses sont les mêmes que lesdites premières adresses.

4. Procédé selon la revendication 3, dans lequel lesdites premières données dudit signal sous forme numérisée correspondent au dit signal reçu et ont un décalage Doppler caractéristique par rapport à une fréquence nominale.

5. Procédé selon la revendication 4, dans lequel lesdites deuxièmes données dudit signal sous forme numérisée sont un signal de réplique préalablement calculé dudit signal sous forme numérisée.

6. Procédé selon la revendication 5, dans lequel ledit traitement est effectué pour une pluralité de satellites de navigation afin de recevoir une pluralité de signaux provenant de ladite pluralité de satellites, en déterminant les données relatives à la position et au temps en fonction de ladite pluralité de signaux reçus.

7. Procédé selon la revendication 6, dans lequel ledit signal de réplique préalablement calculé a une fréquence Doppler caractéristique et une pluralité d'échantillons.

8. Procédé selon la revendication 7, dans lequel ledit procédé acquiert une pluralité de signaux à partir d'une pluralité de satellites de navigation, et
dans lequel ladite deuxième matrice de deuxièmes données pour ledit signal sous forme numérisée comprend une pluralité de signaux décalés en fréquence, chaque signal décalé en fréquence ayant un décalage de fréquence d'une valeur Doppler caractéristique.

9. Procédé d'acquisition d'une pluralité de signaux provenant d'une pluralité de satellites de navigation selon la revendication 8, dans lequel ledit procédé comprend :
la réalisation d'une opération de corrélation dans le domaine de fréquence entre ladite première matrice de signaux sous forme numérisée et ladite deuxième matrice de signaux sous forme numérisée pour constituer une matrice de fonctions de corrélation.

10. Procédé d'acquisition d'une pluralité de signaux provenant d'une pluralité de satellites de navigation selon la revendication 9, comprenant en outre :
la détermination d'une valeur maximale, si elle existe, pour chaque signal reçu.

11. Procédé d'acquisition d'une pluralité de signaux provenant d'une pluralité de satellites de navigation selon la revendication 10, dans lequel, dans le cas où une valeur maximale est déterminée, le décalage Doppler caractéristique associé et la valeur de phase de code associée du signal décalé en fréquence de la première matrice correspondant à la valeur maximale dans la matrice de fonctions de corrélation sont utilisés pour se synchroniser sur le signal reçu.

12. Procédé selon la revendication 10, dans lequel ledit traitement d'un signal provenant d'un satellite de navigation comprend un procédé de suivi de chacun de ladite pluralité de satellites.

13. Procédé selon la revendication 11, dans lequel ledit procédé de suivi comprend en outre :
la génération d'une pluralité d'échantillons de corrélation décalés temporellement, le décalage temporel étant de l'un ou l'autre des côtés de ladite valeur de phase de code, associés à ladite valeur maximale, au dit décalage de fréquence associé à ladite valeur maximale ;
la comparaison de ladite pluralité d'échantillons de corrélation décalés temporellement ;
l'ajustement dudit décalage de temps sur la base de ladite étape de comparaison.

14. Article fabriqué pour traiter un signal provenant d'un satellite de navigation, dans lequel le signal est reçu et converti en un signal sous forme numérisée, et est en outre transformé par un processeur graphique programmable comportant une unité de tramage, une unité d'ombrage de pixels et une unité de mémoire, dans lequel une première matrice de premières données dudit signal sous forme numérisée est mémorisée dans ladite unité de mémoire, dans lequel ledit article de fabrication comprend :
un support utilisable par ordinateur auquel un code de programme lisible par ordinateur est intégré, dans lequel ledit support utilisable par ordinateur comprend en outre :
un code de programme lisible par ordinateur configuré pour amener le processeur graphique programmable à fournir des premières adresses et des valeurs de points d'extrémité de la première matrice de premières données dudit signal sous forme numérisée à ladite unité de tramage, lesdits points d'extrémité correspondant aux points d'extrémité d'un triangle ;
un code de programme lisible par ordinateur configuré pour amener le processeur graphique programmable à générer une pluralité de valeurs interpolées entre des valeurs desdits points d'extrémité de ladite première matrice par ladite unité de tramage ;
un code de programme lisible par ordinateur configuré pour amener le processeur graphique programmable à fonctionner sur ladite première matrice de premières données dudit signal sous forme numérisée provenant de ladite unité de mémoire par ladite unité d'ombrage de pixels en fonction de ladite pluralité de valeurs interpolées et de valeurs desdits points d'extrémité pour ladite première matrice fournies par ladite unité de tramage afin de constituer une matrice résultante de données ; et
un code de programme lisible par ordinateur configuré pour amener le processeur graphique programmable à mémoriser ladite matrice résultante dans ladite unité de mémoire auxdites premières adresses.

15. Article fabriqué selon la revendication 14, dans lequel une deuxième matrice de deuxièmes données dudit signal sous forme numérisée est mémorisée dans ladite unité de mémoire, et dans lequel ledit support utilisable par ordinateur comprend en outre :
un code de programme lisible par ordinateur configuré pour amener le processeur graphique programmable à fournir des deuxièmes adresses et des valeurs de points d'extrémité de ladite deuxième matrice de deuxièmes données dudit signal sous forme numérisée à ladite unité de tramage ;
un code de programme lisible par ordinateur configuré pour amener le processeur graphique programmable à générer une pluralité de valeurs interpolées entre des valeurs de points d'extrémité de ladite deuxième matrice par ladite unité de tramage, dans lequel ladite pluralité de valeurs interpolées et de valeurs de points d'extrémité pour ladite deuxième matrice correspond à des adresses dans ladite unité de mémoire pour ladite deuxième matrice de deuxièmes données dudit signal sous forme numérisée ;
un code de programme lisible par ordinateur configuré pour amener le processeur graphique programmable à fonctionner sur ladite deuxième matrice de premières données dudit signal sous forme numérisée provenant de l'unité de mémoire par ladite unité d'ombrage de pixels en fonction de ladite pluralité de valeurs interpolées et de valeurs desdits points d'extrémité pour ladite deuxième matrice fournies depuis ladite unité de tramage afin de constituer une matrice résultante de données ;
un code de programme lisible par ordinateur configuré pour amener le processeur graphique programmable à mémoriser ladite matrice résultante dans ladite unité de mémoire aux dites deuxièmes adresses ;
dans lequel lesdites premières données dudit signal sous forme numérisée correspondent au dit signal reçu et ont un décalage Doppler caractéristique par rapport à une fréquence nominale ;
dans lequel lesdites deuxièmes données dudit signal sous forme numérisée sont un signal de réplique préalablement calculé dudit signal sous forme numérisée ayant une fréquence Doppler caractéristique et une pluralité d'échantillons ; et
dans lequel ledit traitement est effectué pour une pluralité de satellites de navigation pour recevoir une pluralité de signaux provenant de ladite pluralité de satellites de navigation afin de déterminer les données relatives à la position et au temps sur la base de la pluralité de signaux reçus.

16. Article fabriqué selon la revendication 14, comprenant un code de programme lisible par ordinateur configuré pour effectuer le procédé selon l'une quelconque des revendications 2 à 13.
